# EUROPEAN PATENT APPLICATION

(11) **EP 0 992 313 A1**
(43) Date of publication of application: **12.04.2000**
(21) Application number: 99119614.8
(22) Date of filing: 04.10.1999
(51) Int. Cl.: B23K 11/30

(54) **Resistance stud-welding handy puller**

(30) Priority: 07.10.1998 JP 28526498; 08.03.1999 JP 132399
(71) Applicant: Hirane, Akio, Tokyo (JP)
(72) Inventor: Hirane, Akio, Tokyo (JP)
(74) Representative: Einsel, Martin, Dipl.-Phys.

(57) **Abstract**

The object of the invention is to prevent an excessive lifting of a dent (20) when repairing the dent by welding an electrode tip (14) to the dent and pulling the electrode by means of a resistance stud-welding handy puller.

A multiple-holed disc (18) is attached to the handy puller head. The multiple-holed disc has a number of holes of predetermined shape for allowing the operator to observe the welded area. The electrode tip (14) can be freely moved forward and backward by a transfer mechanism through one of the holes.

## Description

The invention relates to a resistance stud-welding handy puller, by which a stud electrode tip is welded to a dent on the body of an automobile, for example, and the dent is lifted back to the original surface.

When a dent on the automobile body is repaired according to the prior art, a washer (with a thickness of 3 mm and a diameter of 30 mm, for example) detachably attached to the welding machine head is welded to the dent. The welding head is then detached from the washer, and the washer is hooked to a hook puller. By means of the hook puller, the dent is lifted to restore the original surface. The welded washer is thereafter removed from the body, and the restored portion of the body is ground, polished and painted.

In another example of the prior art, instead of the washer or pin, the welding electrode tip itself is welded to the dent, and the dent is repaired by pulling the welding machine head.

These prior art methods are disadvantageous in that the operator may fail to stop the pulling operation when he has to, i.e. when the dent has been sufficiently restored to the original height, resulting in the dent coming out instead.

It is an object of the invention to provide a resistance stud-welding handy puller, whereby after an electrode tip is welded to a dent on an item to be repaired, the dent can be lifted back, just as much as necessary while allowing the operator to observe the welding and pulling processes.

It is another object of the invention to provide a spacer adapted for insertion between a multiple-holed disc attached to the handy puller and the repaired surface, the spacer being adapted for various contours of the repaired surface such that a dent, for example), on various contours of the repaired surface can be repaired by a single handy puller.

The objects of the invention are achieved by the features of the invention. Specifically, in accordance with the invention, a multiple-holed disc is attached to the handy puller head by a support member at a certain distance therefrom. The multiple-holed disc has a number of holes with a predetermined shape for allowing the object below the disc to be observed. The handy puller is further provided with a transfer mechanism for moving the electrode tip forward and backward through one of the holes in the multiple-holed disc.

The invention further provides a spacer for a resistance stud-welding handy puller, said handy puller comprising a puller head, a multiple-holed disc attached to said puller head by means of a support member at a certain distance therefrom, and a transfer mechanism for moving forward or backward a welding tip of said puller head through one of a number of holes formed in said multiple-holed disc. The transfer mechanism comprises an upper handgrip fixed to a puller head support member and a lower handgrip rotatably attached to the support member. The spacer is inserted between said multiple-holed disc of the handy puller and a repaired surface of a repaired item, said spacer being formed in such a shape as to conform to said repaired surface of the repaired item and having a slit which allows the spacer to be inserted without making contact with said electrode tip.

In accordance with the invention, the resistance stud-welding handy puller is disposed such that the multiple-holed disc is placed over the dent portion of the repaired item, such as the automobile body. The many holes provided on the disc helps the operator observe the dent while positioning the welding electrode tip. Accordingly, the handy puller head can be easily and accurately positioned. Furthermore, when pulling the dent by means of the handy puller head after welding the electrode tip, the multiple-holed disc functions to hold back the periphery of the dent, i.e., the non-dented areas of the body, for example, thereby preventing the deformation of areas around the dent.

In accordance with the invention, furthermore, the welded electrode tip is separated from the body by rotating the handy puller while pressing the multiple-holed disc onto the body surface, so that it is easy to apply the twisting force necessary for the separation of the electrode tip from the body surface.

The multiple-holed disc of the invention advantageously functions as a stopper when pulling the welded electrode tip by means of the upper and lower handgrips in order to restore the dent body surface back to the original plane.

The spacer can be formed with a curvature in order to conform to a round edge portion of the repaired item. The spacer is provided with the slit which enables the spacer to be easily inserted between the multiple-holed disc and the repaired surface during the pulling operation without making contact with the electrode tip.

By providing the spacer with the tab extending diagonally upward, the insertion of the spacer between the multiple-holed disc and the repaired surface can be facilitated. The tab can be formed with e.g. a circular, rectangular or polygonal hole, by which the spacer can be hooked onto a pin on the wall, for example, of the shop, thereby helping the operator choose the most appropriate spacer quickly and easily.

The spacer can be advantageously provided with a number of holes, whereby the repaired surface can be observed even during the pulling operation, thus helping to control the pulling operation very delicately.

The spacer can be advantageously provided with a means for detachably attaching to the multiple-holed disc.

The spacer may be formed by a stiff metal such as a steel plate, or by reinforced plastic. By using the spacer according to the invention together with the resistance stud-welding handy puller, the pulling operation can be quickly and easily performed, and over-pulling can be prevented.

The invention is described herein under in detail by way of preferred embodiments with reference made to the drawings, in which like numerals designate like elements throughout various views.
- Fig. 1: is a perspective view of the resistance stud-welding handy puller according to a first embodiment of the invention;
- Fig. 2: is a perspective view of the resistance stud-welding handy puller according to the first embodiment, with the upper and lower handgrips being closed together;
- Fig. 3: shows longitudinal cross-sectional views of the first embodiment of Fig. 1;
- Fig. 4: shows a perspective view of the multiple-holed disc according to the invention, and cross-sectional views of the disc in use showing the electrode tip being welded to the repaired item and being pulled up, respectively;
- Fig. 5: is a cross-sectional view of the assembly of the electrode tip, the electrode tip holder, the slider and the electrode operating grip;
- Fig. 6: is a perspective view of the handy puller according to a second embodiment of the invention; and
- Fig. 7: shows various embodiments of the spacer according to the invention.

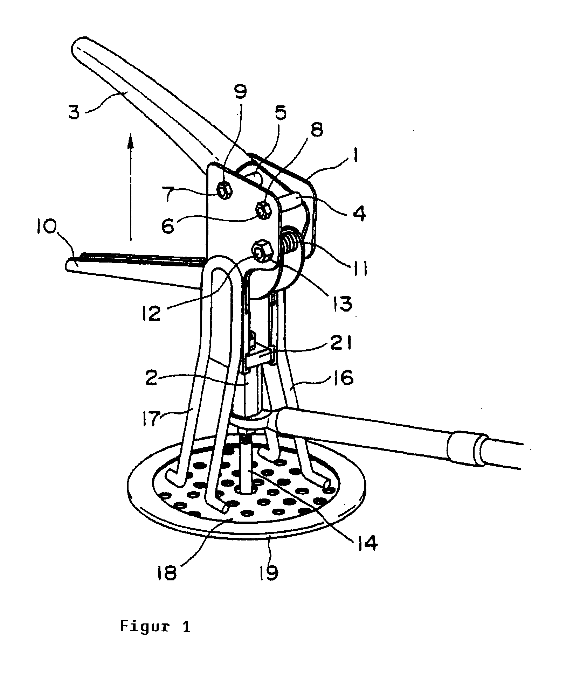

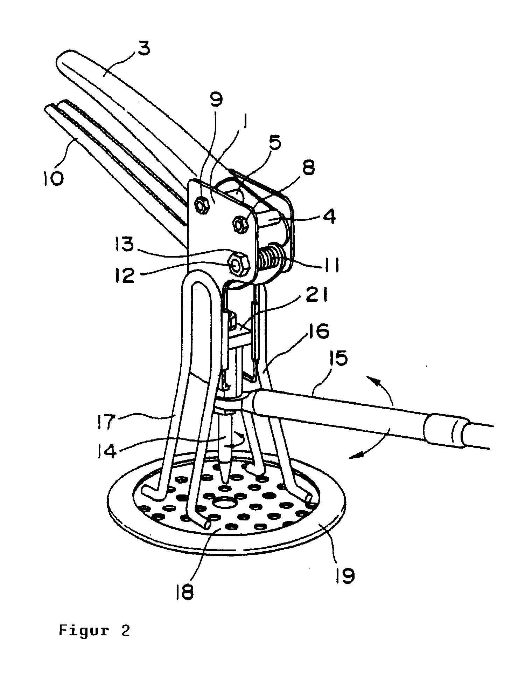

Figs. 1-5 illustrate a first embodiment of the resistance stud-welding handy puller according to the invention. A puller head support member 1 comprises a left support plate and a right support plate which are each bent into an L-shape at the bottom and there connected with each other to form a connecting portion 1'. The connecting portion 1' has a notch or hole through which an electrode tip holder 2 can be moved.

An upper handgrip 3 has a U-shaped cross-section. The upper handgrip 3 is fixed to the left and right support plates of the support member 1 by means of sleeves 4, 5 fit between the side walls of the U-shaped structure, bolts 6, 7, and nuts 8, 9, with the side walls of the U pointing downward.

Numeral 10 designates a lower handgrip having an U-shaped cross-section. A coil spring 11 is fit between the side walls of the U-shaped structure. The lower handgrip 10 is attached to the left and right support plates of the support member 1 by the bolt 12, which is passed through the coil spring 11, and a nut 13, such that the lower handgrip 13 is rotatable about the bolt 12. The side walls of the U-shaped structure point upward, thus facing opposite the upper handgrip 3. one end of the coil spring 11 abuts the sleeve 5 through which the bolt 7 is passed, while the other end of the spring abuts the bottom of the U-shaped structure of the lower handgrip 10. The one end of the coil spring 11 may of course abut the bottom of the U-shaped structure of the upper handgrip, or a protrusion may be formed on either side wall of the U-shaped structure for abutment with the one end of the coil spring. Likewise, the other end of the coil spring may alternatively abut a protrusion formed on either side wall of the U-shaped structure of the lower handgrip instead of the bottom thereof.

On the right and left support plates of the support member 1 are formed guides 1" by bending for slidably guiding a slider 21 therebetween. The slider 21 is square U-shaped in cross-section and is bent at the top in such a manner as to rest at least partly on the upper end faces of the side walls of the U-shaped structure of the lower handgrip 10. The lower part of the slider, i.e. the portion connecting the side walls of the slider 21, is formed with a hole for rotatably accommodating the electrode tip holder 2 via a washer and a nut. On the side walls of the slider 21 are formed pouched-out lugs 21'. The punched-out lugs 21' serve as a stopper for limiting the downward movement of the lower handgrip 10 by the coil spring 11.

Numeral 14 designates the electrode tip fixed to the electrode tip holder 2. An electrode manipulating grip 15 is for rotating the welding electrode tip holder 2 together with the electrode tip 14, as well as for supplying a welding current to the electrode tip 14. To the electrode manipulating grip 15 can be detachably fastened a power supply cable.

Numerals 16, 17 designate support legs fixed by welding, for example, to the left and right support plates of the support member 1. The support legs 16, 17 support the multiple-holed disc 18. The multiple-holed disc 18 is made by a stiff plate of metal or an insulating material. The rim of the multiple-holed disc 18 is covered with a rubber or plastic ring 19. The rubber or plastic ring facilitates a stable resting and positioning of the puller on the repaired surface, as well as providing insulation. The rubber or plastic ring is optional and may be done away with.

A center hole of the multiple-holed disc 18 is dimensioned such that the electrode tip can be contactlessly moved forward and backward therethrough. Other holes in the multiple-holed disc are dimensioned and shaped such that the operator can observe areas below the disc. The drawings show the holes to be round in shape, but other shapes such as oval and rectangular may be used.

The multiple-holed disc may be formed with a curvature in order to conform to a non-planar surface of the repaired item.

Furthermore, there can be prepared a number of multiple-holed discs with various dimensions and contours, so that a most appropriate disc can be selected and attached to the handy puller, depending on the contour of a given surface to be repaired. In this case, too, the periphery of the discs may be provided with the rubber ring.

In the following, the operation of the resistance stud-welding handy puller configured as described above will be described.

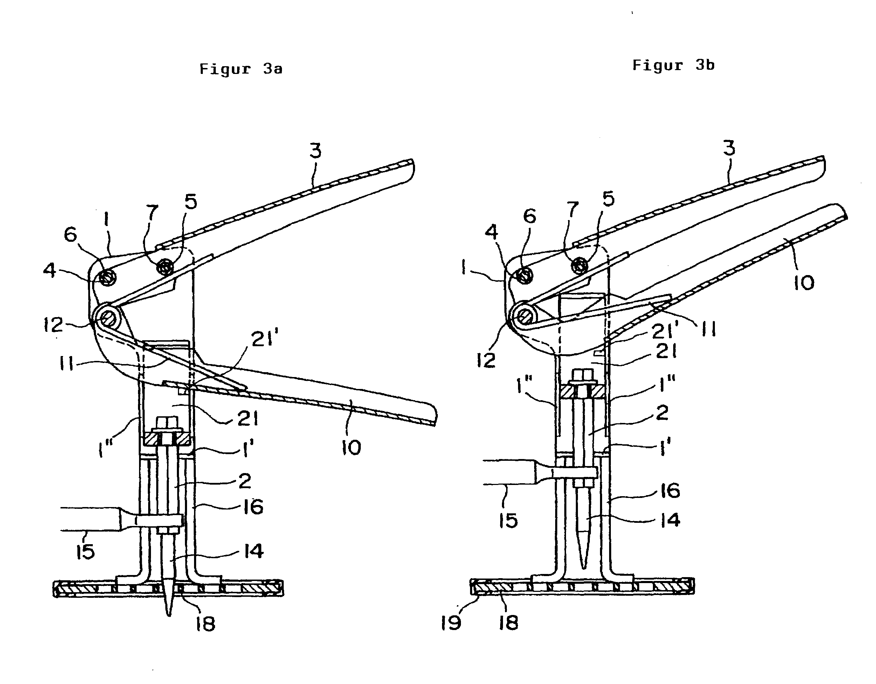

Referring to **Fig. 3**, as the upper handgrip 3 and lower handgrip 10 are opened up by the force of spring provided by the coil spring 11, the lower handgrip 10 abuts the punched-out lug 21', thereby pushing the slider 21 downward. As a result, the electrode tip 14 attached to the slider 21 via the electrode tip holder 2 enters the center hole of the multiple-holed disc and projects from the other side of the disc 18.

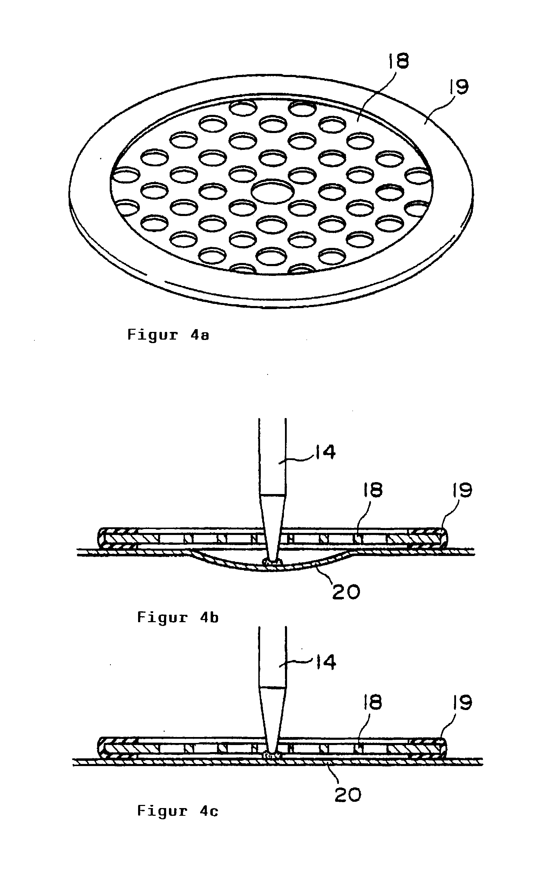

The extent of protrusion of the electrode tip 14 can be controlled by moving the lower handgrip about the bolt 12. The extent of protrusion is adjusted such that, as shown in Fig. 4b, the electrode tip 14 abuts a dent 20 of the automobile body, for example. With the electrode tip abutted against the dent 20, a welding current is flown between the electrode tip 14 and a ground terminal (not shown) of the repaired item, thereby stud-welding the electrode tip 14 onto the dent 20 (Fig. 3b).

After the welded area has cooled down, the operator closes the upper and lower handgrips 10 and 3 by hand, thereby pulling the electrode tip 14 and thus restoring the dent back to its original height. Then, the operator rotates the electrode manipulating grip 15 in a direction as indicated by the arrow, thus exerting a twisting force to the point of the dent 20 where the electrode tip 14 is welded. As a result, the electrode tip 14 can be separated from the repaired item.

Thus, in accordance with the invention, the multiple-holed disc 18 is placed over the dent 20, and the pulling operation can be monitored through the holes of the multiple-holed disc 18. The pulling operation is carried out by squeezing up the lower handgrip 10 with the four parallel (i.e., index to little) fingers of one hand, while pressing the upper handgrip 3 with the thumb and palm of the same hand thus pressing the multiple-holed disc onto the periphery of the dent. Because of the many holes provided in the disc, the operator can observe the dent 20 as he lifts the dent. Furthermore, the multiple-holed disc 18 functions as a stopper surface which prevents the dent 20 from being excessively pulled out and rather protruding from the repaired item. In addition, the separation of the electrode tip 14 from the restored item is facilitated by the electrode manipulating grip 15, which can be totated about the electrode tip by the other hand.

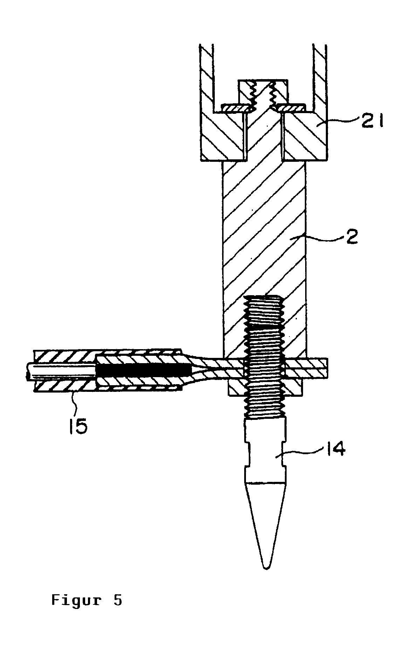

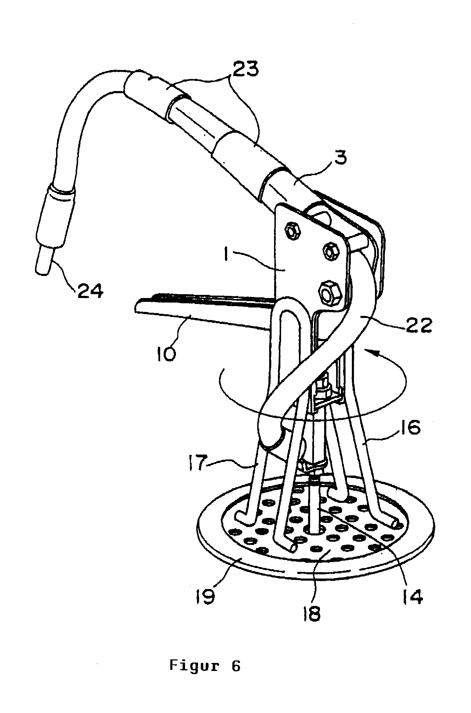

**Fig. 6** shows a second embodiment of the invention. This embodiment differs from the first embodiment of Fig. 5 in that the electrode tip and the electrode holder are mounted non-rotatably on the slider, and that the power supply cable to the electrode tip is run along the inside of the upper handgrip. In Fig. 6, the power supply cable is designated by numeral 22, which is retained within the U-shaped structure by a retaining band 23. Numeral 24 designates a power supply cable connector plug.

The operation of the embodiment of Fig. 6 is the same as that of the first embodiment up to the point of pulling up the dent back to the original surface by gripping the upper and lower handgrips 3 and 10 after welding the electrode tip 14 onto the dent 20 of the restored product. The difference is that the electrode tip is separated from the welded portion by rotating the handy puller as a whole, rather than by the electrode manipulating grip 15, while gripping the upper and lower handgrips 3 and 10.

Next, various embodiments of the spacer for the resistance stud-welding handy puller according to the invention will be described.

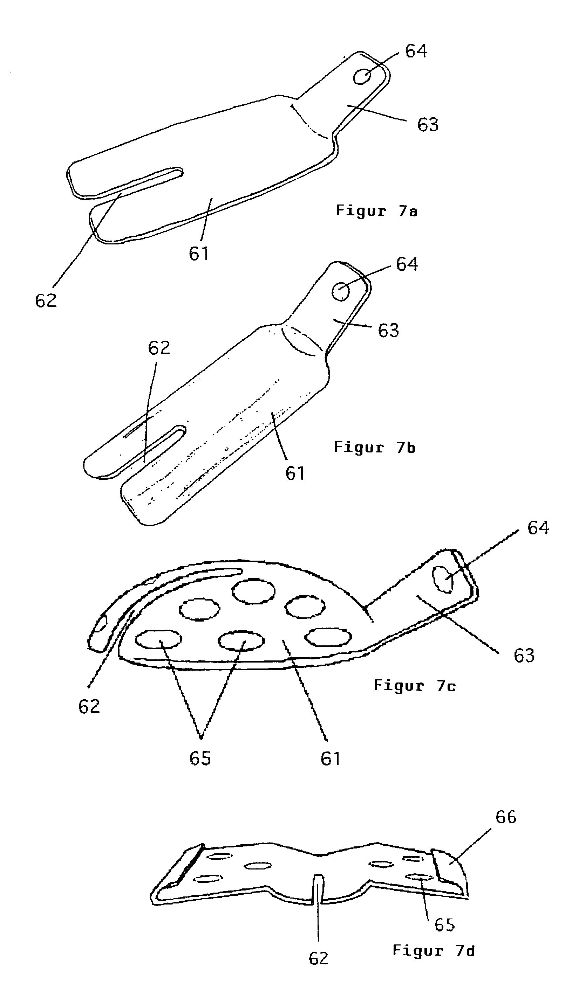

**Fig. 7 (a) to (d)** show various forms of the spacer of the invention. These spacers are inserted between the multiple-holed disc 18 of the handy puller and the surface of the repaired item. As opposed to the case of directly resting the multiple-holed disc 18 on the repaired surface as shown in Fig. 4b, the spacer is inserted between the multiple-holed disc 18 and the repaired surface in such a manner as to lie across the restored region.

The spacer (a) is used for restoring the dent of the repaired item back to a planar surface. This and other spacers 61 are made from stiff metal such as a steel plate. Alternatively, they can be moulded from reinforced plastic. The spacer (a) with the planar working surface has a slit 62 which enables the spacer 61 to be inserted without making contact with the electrode tip. A tab 63 extends from the working surface of the spacer diagonally upward and provides a handle to be held by hand in inserting the spacer between the multiple-holed disc and the repaired item. The tab 63 is formed with a hole 64 by which the spacer can be hooked to a pin on the wall, for example, of the shop for storage purposes. This feature allows a desired spacer suited for a given contour of the restored surface to be quickly picked up.

Fig. 7 (b) shows a spacer 61 having an arched working surface for application onto round edges of the repaired item. At the peak of the arch is formed a slit 62 similar to the one in Fig. 7 (a). The slit 62 may be disposed perpendicular to the one as shown.

Fig. 7 (c) shows a spacer having a curved surface conforming to a spherical segment of the repaired item. The holes 65, which are for facilitating the visual observation of the repaired surface, can be shaped in any manner as long as they do not compromise the spacer strength.

Fig. 7 (d) shows a spacer with a flange 66 for retaining the spacer to the multiple-holed disc. This spacer can be attached to the multiple-holed disc prior to the pulling operation and thus will not be easily displaced during the operation.

The retaining means of Fig. 7(d) may be formed by other known mechanisms such as, for example, a clip mechanism or clamping mechanism.

### List of reference numerals

- 1: puller head support member
- 1': covreeting portion
- 1": guides
- 2: tip holder
- 3: upper handgrip
- 4: sleeve
- 5: sleeve
- 6: bolt
- 7: bolt
- 8: nut
- 9: nut
- 10: lower handgrip

- 11: coil spring
- 12: bolt
- 13: nut
- 14: electrode tip
- 15: electrode manipulating grip
- 16: support leg
- 17: support leg
- 18: multiple-holed disc
- 19: plastic ring
- 20: dept

- 21: slider
- 21': punched-out lugs
- 22: power supply cable
- 23: retaining band
- 24: power supply cable connector plug
- 61: spacer
- 62: slit
- 63: tab
- 64: hole
- 65: hole
- 66: flange

## Claims

1. A resistance stud-welding handy puller comprising a puller head, a multiple-holed disc (18) fixedly attached to said puller head by support means at a certain distance therefrom, an electrode tip (14) and an electrode tip transfer mechanism, wherein said multiple-holed disc (18) has a number of holes with any desired shape through which the operator can observe areas below said disc (18), and wherein said electrode tip (14) can be moved forward or backward by said transfer mechanism through one of said holes in said multiple-holed disc (18).

2. A resistance stud-welding handy puller according to claim 1, wherein the electrode tip (14) is non-rotatably attached to the puller head.

3. A resistance stud-welding handy puller according to claim 1, wherein the electrode tip (14) is attached to the puller head and rotatable by an electrode manipulating grip (15) integrally formed with a path for a power supply line (22) to the electrode tip (14).

4. A resistance stud-welding handy puller according to any one of the preceding claims, wherein the multiple-holed disc (18) is made by a stiff metal or insulating plate having a circular, oval or polygonal shape.

5. A resistance stud-welding handy puller according to any one of the preceding claims, wherein the multiple-holed disc (18) has a curved surface conforming to a desired curved surface of a repaired item.

6. A resistance stud-welding handy puller according to any one of the preceding claims, wherein the transfer mechanism for moving forward or backward the electrode tip (14) attached to the puller head comprises an upper handgrip (3) attached to a support member(1), a lower handgrip (10) rotatably attached to said support member (1), a coil spring (11) fit between said upper and lower handgrips (3, 10), a slider (21) adapted to be moved up and down slidingly by said lower handgrip (10), and a means for attaching the electrode tip (14) to said slider (21).

7. A spacer for a resistance stud-welding handy puller, said handy puller comprising a puller head, a multiple-holed disc (18) attached to said puller head by means of a support member at a certain distance therefrom, and a transfer mechanism for moving forward or backward a welding tip of said puller head through one of a number of holes formed in said multiple-holed disc (18), said transfer mechanism comprising an upper handgrip (3) fixed to a support member (1) of said puller head and a lower handgrip (10) rotatably attached to said support member, wherein said spacer (61) is inserted between said multiple-holed disc (18) of the handy puller and a repaired surface of a repaired item, said spacer (61) being shaped in such a manner as to conform to said repaired surface of the repaired item and having a slit (62) which allows the spacer (61) to be inserted without making contact with said electrode tip (14).

8. A spacer according to claim 7, wherein the spacer (61) has a tab (63) extending diagonally upward and having a small hole (64) formed therein.

9. A spacer according to claim 7 or claim 8, wherein the spacer (61) has a plurality of holes (65) through which the operator can observe the repaired surface.

10. A spacer according to any one of the claims 7 to 10, wherein the spacer (61) has a retaining means for detachably fastening the spacer (61) to said multiple-holed disc (18) of the handy puller.

11. A spacer according to any one of the claims 7 to 10, wherein the spacer (61) is made by a stiff metal or reinforced plastic material.
